# EUROPEAN PATENT SPECIFICATION

(11) **EP 2 541 024 B1**
(45) Date of publication and mention of the grant of the patent: **11.10.2017**
(21) Application number: 12171531.2
(22) Date of filing: 11.06.2012
(51) Int. Cl.: F02C 7/236

(54) **APU fuel system and method**
APU-Kraftstoffsystem und Verfahren
Procédé et système de fourniture de carburant pour APU

(30) Priority: 27.06.2011 US 201113169541
(43) Date of publication of application: 02.01.2013
(73) Proprietor: Hamilton Sundstrand Corporation, Windsor Locks, CT 06096-1010 (US)
(72) Inventor: Hagshenas, Behzad, San Diego, CA California 92127 (US)
(74) Representative: Leckey, David Herbert

(56) References cited:
- US-A- 5 020 314
- US-A1- 2007 284 480
- US-A1- 2010 089 026

## Description

### BACKGROUND

An auxiliary power unit ("APU") creates pneumatic power or electrical power to run the air conditioning system, start the main engines and run other accessories on an aircraft. An APU is important to use because the aircraft is not required to use ground power for aircraft air conditioning, to provide electrical power or start the main engines.

APU Fuel Controls Units (FCUs) are typically shaft driven from the APU gearbox and the fuel is metered based on the APU load by a metering device (i.e., servo valve). Some APU FCUs are driven by a variable speed electrical motor that attempts to meter the fuel demanded by the APU by changing the speed of the pump motor.

Prior art fuel systems are disclosed in documents US5020314 and US2007/0284480.

### SUMMARY

An example control disclosed herein for providing the fuel to an auxiliary power unit ("APU") includes, according to claim 1, a constant speed electrical motor, a first pump driven by the motor and a second pump driven by the motor. The electric motor, the first pump and the second pump provide fuel at sufficient pressure to start the APU.

According to a further example provided herein a method for providing fuel to an APU includes, according to claim 8, providing a constant speed electrical motor; providing a first pump driven by the motor; providing a second pump driven by the motor; and driving the electric motor at a constant speed such that the first pump and the second pump provide fuel at sufficient pressure to start and to operate the APU.

These and other features of the present disclosure can be best understood from the following specification and drawings, the following of which is a brief description.

### BRIEF DESCRIPTION OF THE DRAWINGS

Figure 1 shows a schematic view of a prior art APU fuel system.
Figure 2 is a schematic view of a simple and reliable APU fuel system as described herein.

### DETAILED DESCRIPTION

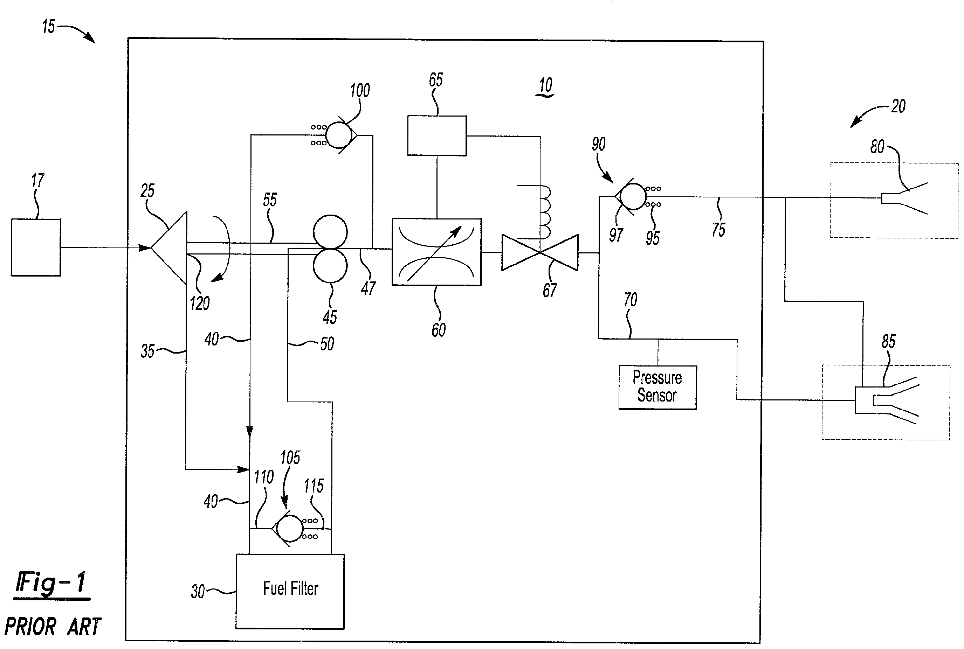

Referring to Figure 1 a prior art, fuel control unit ("FCU") 10 for an APU 15 is shown. Generally, fuel must be pumped from a fuel tank 17 to a first pressure and then a higher pressure for use at APU fuel nozzles 20. The higher pressure is required to provide proper atomization for fuel entering the nozzles 20.

Fuel passes from the fuel tank 17 to a boost stage pump 25. The boost stage pump 25 is driven off an APU gearbox (not shown) and pressurizes the fuel and sends it to a fuel filter 30 via lines 35 and 40. After passing through the fuel filter 30, the fuel is delivered to the high pressure pump 45 via line 50. The boost stage pump 25 and the high pressure pump 45 are ganged together by shaft 55. After passing through the high pressure pump 45, the fuel is at a proper pressure for delivery to the nozzles 20. The fuel then passes through a servo valve 60 which is controlled by a controller 65 to meter flow through lines 70 and 75. A valve 67, also controlled by controller 65, is disposed downstream of the servo valve 65 and acts as an emergency shut off. The fuel lines 70 and 75 include a flow divider 90 to apportion fuel to a simplex nozzle 80 or duplex nozzle 85 within the APU 15. The flow divider 90, as is known in the art, uses a ball valve 97 that gives way according to the fuel pressure against the spring 95 to provide fuel to the simplex nozzle 80 or to the duplex nozzle 85.

Fuel passing through the high pressure pump 45 may be diverted if the pressure becomes too high through the pressure relief valve 100, which again is a standard ball valve to recirculate fuel through the fuel filter 30. If the fuel filter 30 becomes clogged and pressure backs up there, fuel may be diverted around the fuel filter 30 through a pressure relief valve 105 via lines 40, 110 and 115.

During start up of the APU 15, the shaft driven FCU 10 needs to generates enough flow capacity with relatively high pressure for good atomization at the nozzles 20. However, when an FCU 10 is physically sized for the start condition, such an FCU 10 will generate considerably more flow capacity than needed when the APU 15 is running at normal operating speed. This excess fuel flow which is typically about 300% - 500% of what is needed, is recirculated back to the high pressure pump 45 and the boost stage pump 25 through the pressure relief valve 100 back through lines 35, 40 and 50. The amount of fuel recirculation back into the inlet of the pump increases even more when the APU 15 is operating at no load at high altitude conditions. This in turn may cause fuel overheating that may be difficult to resolve. Shaft driven FCUs also contain seals (not shown) at the gearbox interface. In time due to rubbing action, these seals will wear and can cause external oil and/or fuel leakage that impact the safety and reliability. An FCU 10 with external leakage will then need to be replaced.

Note that the FCU 10 shown in Figure 1 may provide fuel flows that are 300% to 500% higher than required by the APU 15, making it an inefficient design when it comes to power consumption.

Further, prior art systems (not shown) have been designed with variable speed electrical motors (not shown) that drive pumps (not shown) such that fuel flow is metered by speeding and slowing the motor driving the pump. However, such systems require expensive motors and sophisticated motor controllers for precise motor speed control with very fast response time to be able to manage the rapid required transient response necessary for an APU.

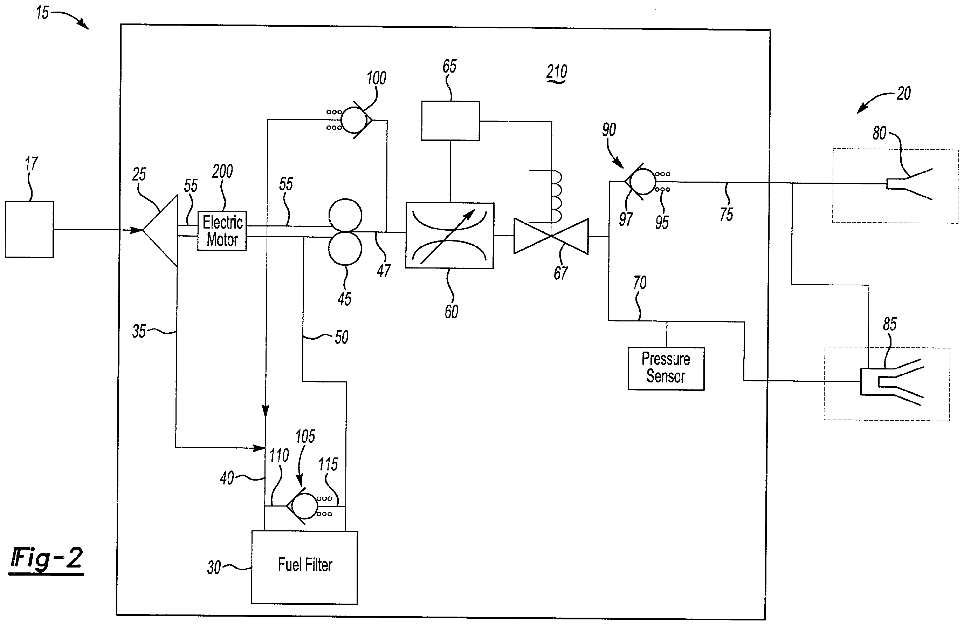

Referring now to Figure 2, instead of driving the shaft 55 off an APU gearbox (not shown), the shaft 55 is now driven by a constant speed electric motor 200. The motor 200 may be semi-hermetic with no dynamic seals to wear. Since during APU starting, the electric motor 200 of FCU 210 is at 100% speed and independent of the actual APU speed, the physical size of the pump 25, 45 can be substantially smaller as compared to the shaft driven FCU 10. The FCU 210 is typically sized to deliver the maximum fuel demanded by the APU 15 plus a slight margin for engine/pump deterioration. This margin may be as high as 20% or more. The electric motor 200 may be AC induction, DC brushless, switch reluctance or other types. The electric motor 200 may be single speed or a multiple speed motor. The electric motor 200 may be low voltage or high voltage and might be powered during the APU 15 start by the aircraft battery or the APU generator and may be designed to have its input power switched to another source such as an APU driven alternator or other external power. The electric motor 200 may be disposed between the first and second pumps 25,45 or on either side thereof. Prior to APU 15 cranking for the start, the electric motor 200 starts to full speed within seconds and generates the proper fuel pressure and flow demanded by the APU controller 65 for proper combustion ignition through the nozzles 85. During the normal operation, the excess flow will be recirculated similar to the existing FCUs. However, this quantity of recirculation is substantially less than the existing mechanically driven pumps 25 and 45 as shown in Figure 1. Moreover, this FCU 210 does not require a complicated variable speed motor or a motor controller with very fast response time for precise motor speed control. If the APU 15 is running by using FCU 10 that utilizes the gearbox driven boost stage pump 25 and high pressure pump 45, the excess fuel flow may be over 300% to 500% of fuel flow needed, which is not only inefficient but also may cause fuel overheating when the fuel demand is low.

In contrast, the FCU 210 that uses the constant speed electrical motor 200, the maximum over pumping at the same operating conditions is about 20%. As such, the drain on the APU 15 to drive the electric motor 200 is less than the power required to drive the shaft driven FCUs. The electric motor 200, which is independent of APU speed, provides higher start reliability, better energy efficiency due to little recirculation during full APU speed, and no dynamic seals for enhanced reliability and safety. There is less drag on the APU gearbox during cold starts which increases APU start torque margin.

Although preferred embodiments have been disclosed, a worker of ordinary skill in this art would recognize that certain modifications would come within the scope of this disclosure. For that reason, the following claims should be studied to determine the true scope and content of this disclosure.

## Claims

1. A control for providing fuel to an auxiliary power unit ("APU") (15), said control comprising:
an electrical motor (200);
a first pump (25) driven by said electrical motor (200); and,
a second pump (45) driven by said motor (200) wherein said electrical motor (200), said first pump (25) and said second pump (45) are configured for providing fuel at sufficient pressure/flow to start said APU (15), **characterized in that**
the electrical motor (200) is a constant speed electrical motor.

2. The control of claim 1 wherein said constant speed electrical motor (200), said first pump (25) and said second pump (45) provide fuel at sufficient pressure to start said APU plus a flow capacity factor of said fuel, said flow capacity factor of said fuel being, for example, about 20% of maximum fuel demanded by the APU (15).

3. The control of any preceding claim wherein said constant speed electrical motor (200) is disposed between said first pump (25) and said second pump (45).

4. The control of claim 1 or 2 wherein said constant speed electrical motor (200) is on either side of the first pump (25) and second pump (45).

5. The control of any preceding claim wherein said first pump (25) raises said fuel to a first pressure.

6. The control of claim 5 wherein said second pump (45) raises said fuel to a second pressure greater than said first pressure.

7. The control of claim 6 wherein said second pump (45) has a flow capacity greater than a flow necessary to run an APU at full load plus 20%.

8. A method for providing fuel to an auxiliary power unit ("APU") (15), said method comprising:
providing an electrical motor (200);
providing a first pump (25) driven by said electrical motor (200);
providing a second pump (45) driven by said electrical motor (200); and
driving said electric motor (200) at a constant speed such that said first pump (25) and said second pump (45) provide fuel at sufficient pressure/flow capacity to run said APU (25).

9. The method of claim 8 further comprising:
driving said electrical motor (200) at a constant speed such that said first pump (25) and said second pump (45) provide fuel at sufficient pressure to run said APU (15) at full load plus a flow capacity factor.

10. The method of claim 9 wherein said flow capacity factor of said fuel is about 20% of maximum fuel demanded by the APU (15).

11. The method of claim 8, 9 or 10 further comprising:
disposing said electrical motor (200) between said first pump (25) and said second pump (45).

12. The method of any of claims 8, 9 or 10 further comprising:
disposing said electrical motor (200) on either side of the first pump (25) and second pump (45).

13. The method of any of claim 8 to 12 comprising:
raising said fuel to a first pressure by said first pump.

14. The method of claim 13 comprising:
raising said fuel to a second pressure by said second pump (45) that is greater than said first pressure.

15. The method of claim 14 wherein said second pressure is greater than a pressure necessary to run an APU (15) at full load plus 20% margin.

## Patentansprüche

1. Steuerelement, das ein Hilfstriebwerk ("APU") (15) mit Kraftstoff versorgt, wobei das Steuerelement Folgendes umfasst:
einen Elektromotor (200),
eine erste Pumpe (25), die von dem Elektromotor (200) angetrieben wird, und
eine zweite Pumpe (45), die von dem Motor (200) angetrieben wird, wobei der Elektromotor (200), die erste Pumpe (25) und die zweite Pumpe (45) dazu konfiguriert sind, den Kraftstoff mit genügend Druck/Durchfluss zu liefern, um das APU (15) zu starten, **dadurch gekennzeichnet, dass** der Elektromotor (200) ein Elektromotor mit konstanter Geschwindigkeit ist.

2. Steuerelement nach Anspruch 1, wobei der Elektromotor (200) mit konstanter Geschwindigkeit, die erste Pumpe (25) und die zweite Pumpe (45) Kraftstoff mit genügend Druck liefern, um das APU zu starten plus einen Durchflusskapazitätsfaktor des Kraftstoffs, wobei der Durchflusskapazitätsfaktor des Kraftstoffs zum Beispiel etwa 20 % des Kraftstoffs beträgt, den das APU (15) maximal benötigt.

3. Steuerelement nach einer der vorhergehenden Ansprüche, wobei der Elektromotor (200) mit konstanter Geschwindigkeit zwischen der ersten Pumpe (25) und der zweiten Pumpe (45) angeordnet ist.

4. Steuerelement nach Anspruch 1 oder 2, wobei der Elektromotor (200) mit konstanter Geschwindigkeit auf einer der beiden Seiten der ersten Pumpe (25) und der zweiten Pumpe (45) angeordnet ist.

5. Steuerelement nach einem der vorhergehenden Ansprüche, wobei die erste Pumpe (25) den Druck des Kraftstoffs auf einen ersten Wert erhöht.

6. Steuerelement nach Anspruch 5, wobei die zweite Pumpe (45) den Druck des Kraftstoffs auf einen zweiten Wert erhöht, der größer ist als der erste Wert.

7. Steuerelement nach Anspruch 6, wobei die zweite Pumpe (45) eine Durchflusskapazität hat, die größer ist als der Durchfluss, der benötigt wird um das APU unter Volllast zu betreiben plus 20 %.

8. Verfahren zur Versorgung eines Hilfstriebwerks ("APU") (15) mit Kraftstoff, wobei das Verfahren folgende Schritte umfasst:
Bereitstellen eines Elektromotors (200),
Bereitstellen einer ersten Pumpe (25), die von dem Elektromotor (200) angetrieben wird,
Bereitstellen einer zweiten Pumpe (45), die von dem Elektromotor (200) angetrieben wird und
Antreiben des Elektromotors (200) mit konstanter Geschwindigkeit, sodass die erste Pumpe (25) und die zweite Pumpe (45) Kraftstoff mit genügend Druck/Durchflusskapazität liefern, um das APU (25) zu betreiben.

9. Verfahren nach Anspruch 8, das weiterhin folgenden Schritt umfasst:
Antreiben des Elektromotors (200) mit konstanter Geschwindigkeit, sodass die erste Pumpe (25) und die zweite Pumpe (45) Kraftstoff mit genügend Druck liefern, um das APU (15) unter Volllast zu betreiben plus einen Durchflusskapazitätsfaktor.

10. Verfahren nach Anspruch 9, wobei der Durchflusskapazitätsfaktor des Kraftstoffs etwa 20 % des Kraftstoffs beträgt, den das APU (15) maximal benötigt.

11. Verfahren nach Anspruch 8, 9 oder 10, das weiterhin folgenden Schritt umfasst:
Anordnen des Elektromotors (200) zwischen der ersten Pumpe (25) und der zweiten Pumpe (45).

12. Verfahren nach einem der Ansprüche 8, 9 oder 10, das weiterhin folgenden Schritt umfasst:
Anordnen des Elektromotors (200) auf einer der beiden Seiten der ersten Pumpe (25) und der zweiten Pumpe (45).

13. Verfahren nach einem der Ansprüche 8 bis 12, das folgenden Schritt umfasst:
Erhöhen des Drucks des Kraftstoffs auf einen ersten Wert durch die erste Pumpe.

14. Verfahren nach Anspruch 13, das folgenden Schritt umfasst:
Erhöhen des Drucks des Kraftstoffs auf einen zweiten Wert, der größer ist als der erste Wert, durch die zweite Pumpe (45).

15. Verfahren nach Anspruch 14, wobei der zweite Druck größer ist als ein Druck, der benötigt wird, um das APU (15) unter Volllast zu betreiben plus einen Toleranzwert von 20 %.

## Revendications

1. Système de contrôle de fourniture de carburant à un groupe auxiliaire de puissance (APU) (15), ledit système de contrôle comprenant :
un moteur électrique (200) ;
une première pompe (25) entraînée par ledit moteur électrique (200) ; et
une seconde pompe (45) entraînée par ledit moteur (200), dans lequel ledit moteur électrique (200), ladite première pompe (25) et ladite seconde pompe (45) sont configurés pour fournir du carburant à une pression suffisante/à un débit suffisant pour démarrer ledit APU (15), **caractérisé en ce que** le moteur électrique (200) est un moteur électrique à vitesse constante.

2. Système de contrôle selon la revendication 1, dans lequel ledit moteur électrique à vitesse constante (200), ladite première pompe (25) et ladite seconde pompe (45) fournissent du carburant à une pression suffisante pour démarrer ledit APU plus un facteur de débit nominal dudit carburant, ledit facteur de débit nominal dudit carburant étant par exemple d'environ 20 % du carburant demandé au maximum par l'APU (15).

3. Système de contrôle selon une quelconque revendication précédente, dans lequel ledit moteur électrique à vitesse constante (200) est disposé entre ladite première pompe (25) et ladite seconde pompe (45).

4. Système de contrôle selon la revendication 1 ou 2, dans lequel ledit moteur électrique à vitesse constante (200) est de chaque côté de la première pompe (25) et de la seconde pompe (45).

5. Système de contrôle selon une quelconque revendication précédente, dans lequel ladite première pompe (25) élève ledit carburant à une première pression.

6. Système de contrôle selon la revendication 5, dans lequel ladite seconde pompe (45) élève ledit carburant à une seconde pression supérieure à ladite première pression.

7. Système de contrôle selon la revendication 6, dans lequel ladite seconde pompe (45) a un débit nominal supérieur à un débit nécessaire pour faire fonctionner un APU à pleine charge plus 20 %.

8. Procédé servant à fournir du carburant à un groupe auxiliaire de puissance (APU) (15), ledit procédé comprenant :
la fourniture d'un moteur électrique (200) ;
la fourniture d'une première pompe (25) entraînée par ledit moteur électrique (200) ;
la fourniture d'une seconde pompe (45) entraînée par ledit moteur électrique (200) ; et
l'entraînement dudit moteur électrique (200) à une vitesse constante telle que ladite première pompe (25) et ladite seconde pompe (45) fournissent du carburant à une pression suffisante/à un débit nominal suffisant pour faire fonctionner ledit APU (25).

9. Procédé selon la revendication 8, comprenant en outre :
l'entraînement dudit moteur électrique (200) à une vitesse constante telle que ladite première pompe (25) et ladite seconde pompe (45) fournissent du carburant à une pression suffisante pour faire fonctionner ledit APU (15) à pleine charge plus un facteur de débit nominal.

10. Procédé selon la revendication 9, dans lequel ledit facteur de débit nominal dudit carburant est d'environ 20 % du carburant demandé au maximum par l'APU (15).

11. Procédé selon la revendication 8, 9 ou 10 comprenant en outre :
la disposition dudit moteur électrique (200) entre ladite première pompe (25) et ladite seconde pompe (45).

12. Procédé selon l'une quelconque des revendications 8, 9 ou 10, comprenant en outre :
la disposition dudit moteur électrique (200) de chaque côté de la première pompe (25) et de la seconde pompe (45).

13. Procédé selon l'une quelconque des revendications 8 à 12, comprenant :
l'élévation dudit carburant à une première pression par ladite première pompe.

14. Procédé selon la revendication 13, comprenant :
l'élévation dudit carburant à une seconde pression par ladite seconde pompe (45), laquelle seconde pression est supérieure à ladite première pression.

15. Procédé selon la revendication 14, dans lequel ladite seconde pression est supérieure à une pression nécessaire pour faire fonctionner un APU (15) à pleine charge plus une marge de 20 %.
